# EUROPEAN PATENT APPLICATION

(11) **EP 4 319 332 A1**
(43) Date of publication of application: **07.02.2024**
(21) Application number: 21934009.8
(22) Date of filing: 01.04.2021
(51) Int. Cl.: H04W 56/00

(54) **TIME OFFSET VALUE UPDATE METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: ZHU, Yajun, Beijing 100085 (CN)
(74) Representative: dompatent von Kreisler Selting Werner - Partnerschaft von Patent- und Rechtsanwälten mbB
(86) International application number: PCT/CN2021/085052
(87) International publication number: WO 2022/205351

(57) **Abstract**

Embodiments of the present invention provide a time offset value update method and apparatus for a non-terrestrial network (NTN), and a communication device and a storage medium. Regarding the time offset value update method for the NTN, the method is performed by a base station and comprises: updating a time offset value when an update condition is satisfied. The embodiments provided by the present invention can mitigate the problem of communication failure or poor communication quality between a UE and the base station of the NTN caused by incompatibility of a static time offset value, thereby improving the communication success rate and/or the communication quality of an NTN cell.

## Description

### TECHNICAL FIELD

The disclosure relates to the field of wireless communication technology, and in particular to methods and apparatuses for updating a time offset value for a non-terrestrial network (NTN), a communication device, and a storage medium.

### BACKGROUND

The continuous emergence of new Internet applications, such as a new generation of Augmented Reality (AR)/Virtual Reality (VR) and vehicle-to-vehicle communication, has put forward higher requirements for wireless communication technology, driving the continuous evolution of wireless communication technology to meet the needs of the application. At present, the cellular mobile communication technology is in the evolution stage of a new generation technology. An important feature of the new generation technology is to support flexible configuration of multiple business types. Different service types have different requirements for the wireless communication technology. For example, the enhanced mobile bandwidth (eMBB) service type mainly focuses on large bandwidth and high speed, the Ultra-reliable and Low Latency Communications, (URLLC) business type mainly requires high reliability and low delay, and the massive Machine Type of Communication (mMTC) business type mainly requires a large number of connections. Therefore, the new generation of wireless communication system needs a flexible and configurable design to support the transmission of various service types.

In the research of wireless communication technology, a non-terrestrial network (NTN) communication is an important scheme of wireless communication. A typical NTN communication includes a satellite communication. The satellite communication refers to the communication carried out by radio communication devices on the ground using a satellite as the relay. The satellite communication system consists of a satellite part and a ground part. Characteristics of the satellite communication includes that a communication range is range; within a range covered by radio waves emitted by the satellite, the communication can be carried out between any two points; the communication is not easily affected by land disasters (i.e., has a high reliability). As a complement to a current terrestrial cellular communication system, the satellite communication can have the following benefits.

Extended coverage: for areas where the current cellular communication system cannot cover or has a high coverage cost, such as oceans, deserts, and remote mountainous areas, the satellite communication can be used to solve communication problems.

Emergency communications: under extreme conditions, such as disasters, e.g., earthquakes, where the infrastructure of the cellular communication cannot be used, the satellite communication can be used to quickly establish communications connections.

Provision of industry applications: for e.g. delay-sensitive services transmitted over long distances, the satellite communication can be used to reduce the delay of service transmission.

It is foreseeable that in the future wireless communication system, the satellite communication system and the terrestrial cellular communication system will gradually realize the deep integration, and truly realize the intelligent connection of all things.

### SUMMARY

Embodiments of the disclosure provide methods and apparatuses for updating a time offset value for a non-terrestrial network (NTN), a communication device, and a storage medium.

A first aspect of embodiments of the disclosure provides a method for updating a time offset value for an NTN. The method is performed by a base station. The method includes: updating a time offset value in response to an update condition being satisfied.

A second aspect of embodiments of the disclosure provides a method for updating a time offset value for an NTN. The method is performed by a user equipment (UE). The method includes: updating a time offset value.

A third aspect of embodiments of the disclosure provides an apparatus for updating a time offset value for an NTN. The apparatus includes: an updating module configured to update a time offset value in response to an update condition being satisfied.

A fourth aspect of embodiments of the disclosure provides an apparatus for updating a time offset value for an NTN. The apparatus includes: an updating module configured to update a time offset value.

A fifth aspect of embodiments of the disclosure provides a communication device. The communication device includes a processor, a transceiver, a memory, and an executable program stored on the memory and executable by the processor. When the processor executes the executable program, the method for updating a time offset value according to the first aspect or the second aspect is performed.

A fifth aspect of embodiments of the disclosure provides a computer storage medium. The computer storage medium has an executable program stored thereon. After the executable program is performed by a processor, the method for updating a time offset value according to the first aspect or the second aspect is performed.

In the technical solution according to embodiments of the disclosure, the time offset value for the NTN will be updated. Therefore, it can solve problem that a communication failure or poor communication quality between the UE and a base station of the NTN is caused because a relatively static time offset value is not adaptive as the network state changes. In addition, the communication success rate and/or the communication quality of an NTN cell can be improved.

It is understandable that the foregoing general description and the following detailed description are illustrative and explanatory only and are not limiting of embodiments of the disclosure.

### BRIEF DESCRIPTION OF THE DRAWINGS

The accompanying drawings, which are incorporated in and constitute a part of this description, illustrate embodiments consistent with the disclosure and together with the description serve to explain the principles of embodiments of the disclosure.
FIG. 1 is a schematic structural diagram illustrating a wireless communication system according to an example embodiment.
FIG. 2 is a schematic flowchart illustrating a method for updating a time offset value for a non-terrestrial network (NTN) according to an example embodiment.
FIG. 3A is a schematic diagram illustrating a time offset value according to an example embodiment.
FIG. 3B is a schematic diagram illustrating a time offset value according to an example embodiment.
FIG. 4 is a schematic flowchart illustrating a method for updating a time offset value for an NTN.
FIG. 5Ais a schematic flowchart illustrating a method for updating a time offset value for an NTN according to an example embodiment.
FIG. 5B is a schematic flowchart illustrating a method for updating a time offset value for an NTN according to an example embodiment.
FIG. 6 is a block diagram illustrating an apparatus for updating a time offset value for an NTN according to an example embodiment.
FIG. 7 is a block diagram illustrating an apparatus for updating a time offset value for an NTN according to an example embodiment.
FIG. 8 is a block diagram illustrating a user equipment (UE) according to an example embodiment.
FIG. 9 is a block diagram of a communication device according to an example embodiment.

### DETAILED DESCRIPTION

Embodiments of the disclosure will be described in detail below, examples of which are illustrated in the accompanying drawings, in which the same or similar reference numerals refer to the same or similar elements or elements having the same or similar functions throughout the description. The implementations described in the following example embodiments do not represent all implementations consistent with embodiments of the disclosure. Rather, they are merely examples of apparatuses and methods consistent with some aspects of embodiments of the disclosure as recited in the appended claims.

The terms used in embodiments of the disclosure are only for the purpose of describing particular embodiments, and are not intended to limit embodiments of the disclosure. As used in embodiments of the disclosure and the appended claims, the singular forms "a," "an," and "the" are intended to include the plural forms as well, unless the context clearly dictates otherwise. It is understandable that the term "and/or" as used herein refers to and includes any and all possible combinations of one or more of the associated listed items.

It is understandable that although the terms first, second, third, etc. may be used in embodiments of the disclosure to describe various pieces of information, such information should not be limited to these terms. These terms are only used to distinguish a type of information from another type of information For example, without departing from the scope of embodiments of the disclosure, the first information may also be referred to as the second information, and similarly, the second information may also be referred to as the first information. Depending on the context, the word "if" as used herein can be interpreted as "at the time of," "when," or "in response to determining. "

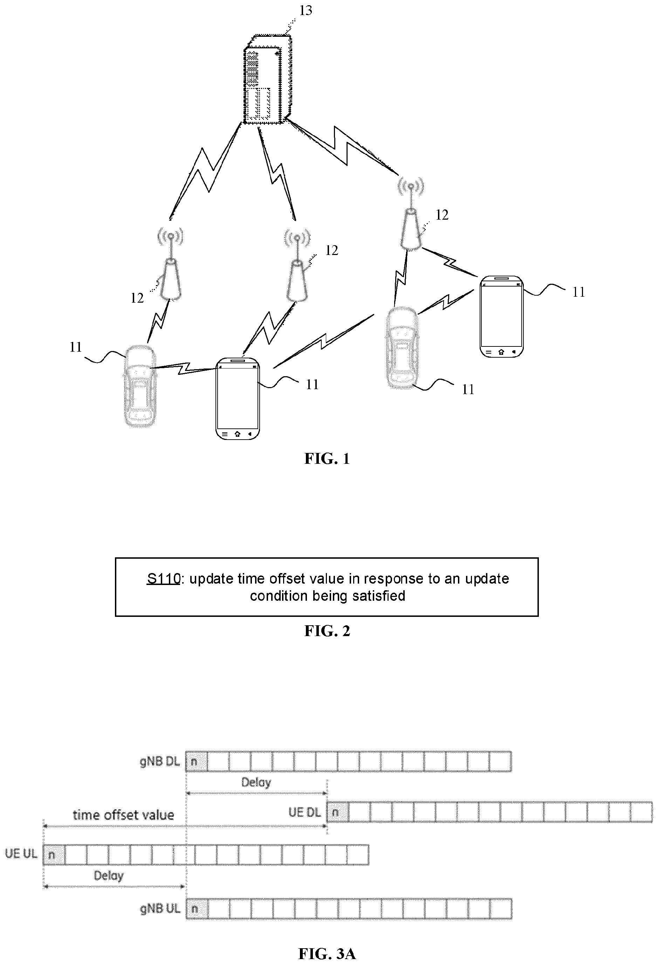

FIG. 1 is a schematic structural diagram illustrating a wireless communication system according to an embodiment of the disclosure. As illustrated in FIG. 1, the wireless communication system is a communication system based on cellular mobile communication technology, and the wireless communication system may include: several user equipment (UEs) 11 and several access devices 12.

The UE 11 may be a device that provides voice and/or data connectivity to a user. The LTE 11 may communicate with one or more core networks via a Radio Access Network (RAN). The LTE 11 may be an Internet of Things (IoT) LTE, such as a sensor device, a cell phone (or "cellular" phone), and a computer with the IoT UE. The UE 110 may also be a stationary, portable, pocket-sized, handheld, computer-built, or vehicle-mounted device, such as, a Station (STA), a subscriber unit, a subscriber station, a mobile station, a mobile, a remote station, an access point, a remote terminal, an access terminal, a user terminal, a user agent, a user device, or a UE. Or, the LTE 11 may be an unmanned aerial vehicle device. Or, the LTE 11 may be an in-vehicle device, for example, an electronic control unit having wireless communication function, or a wireless UE external to the ECU. Or, the UE 11 can also be a roadside device, for example, a street light, a signal light, or other roadside devices having wireless communication function.

The access device 12 may be a network side device in the wireless communication system. The wireless communication system may be the 4th Generation (4G) mobile communication system, also known as Long Term Evolution (LTE) system. Or, the wireless communication system may also be a 5G system, also known as New Radio (NR) system or 5G NR system. Or, the wireless communication system may be any next generation system of the 5G system. The access network in the 5G system may be called New Generation-RAN (NG-RAN). Or MTC system.

The access device 12 can be an evolved base station (eNB) employed in the 4G system. Or, the access device 12 may be a base station (gNB) with a centralized distributed architecture employed in the 5G system. When the access device 12 adopts a centralized distributed architecture, it usually includes a Central Unit (CU) and at least two Distributed Units (DUs). The CU is equipped with the protocol stack of Packet Data Convergence Protocol (PDCP) layer, Radio Link Control (RLC) layer, or Media Access Control (MAC) layer. The DU is equipped with the protocol stack of the physical (PHY) layer, and the specific implementation of the access device 12 is not limited in embodiments of the disclosure.

A wireless connection can be established between the access device 12 and the UE 11 via a radio interface. In different implementations, the radio interface is a radio interface based on the 4G standard. Or, the radio interface is a radio interface based on the 5G standard, such as a NR. Alternatively, the radio interface may also be a radio interface based on the standard of the next generation of 5G.

In some embodiments, End to End (E2E) connections can also be established between the LTEs 11 in scenarios, such as, Vehicle to Vehicle (V2V) communication, Vehicle to Infrastructure (V2I) communication, and Vehicle to Pedestrian (V2P) communication in Vehicle to Everything (V2X) communication.

In some embodiments, the above wireless communication system may also include a network management device 13.

The plurality of access devices 12 are connected to the network management device 13 respectively. The network management device 13 may be a core network device in the wireless communication system, for example, a Mobility Management Entity (MME) in an Evolved Packet Core (EPC). Or, the network management device may be another core network device, such as a Serving GateWay (SGW), a Public Data Network GateWay (PGW), a Policy and Charging Rules Function (PCRF), or a Home Subscriber Server (HSS), etc. The implementation form of the network management device 13 is not limited in embodiments of the disclosure.

As illustrated in FIG. 2, embodiments of the disclosure provide a method for updating a time offset value for an NTN. The method is performed by a base station. The method includes the following.

At block S110, a time offset value is updated in response to an update condition being satisfied.

In embodiments of the disclosure, the method can be performed by a base station of an NTN. The base station of the NTN can be carried on a satellite. Or, the base station of the NTN can be located on the ground, and a communication connection between the base station and a serving terminal is established through the satellite.

In embodiments of the disclosure, the time offset value is a time offset value applied to the communication between the base station of the NTN and the UE. For example, the time offset value includes, but is not limited to, K_offset. It is noteworthy that K_offset is one of instances of the time offset value. Due to a large propagation delay between the base station and the serving terminal of the NTN, the K_offset can be used to enhance following time relationships:
a transmission time of a downlink control information (DCI) and a transmission time of a Physical Uplink Shared Channel (PUSCH) scheduled by the DCI; or
a transmission time of a DCI used for a random access response (RAR) and a transmission time of a PUSCH scheduled by the DCI.

It is noteworthy that the time relationship related to the time offset indicated by K_offset is not limited to the above examples.

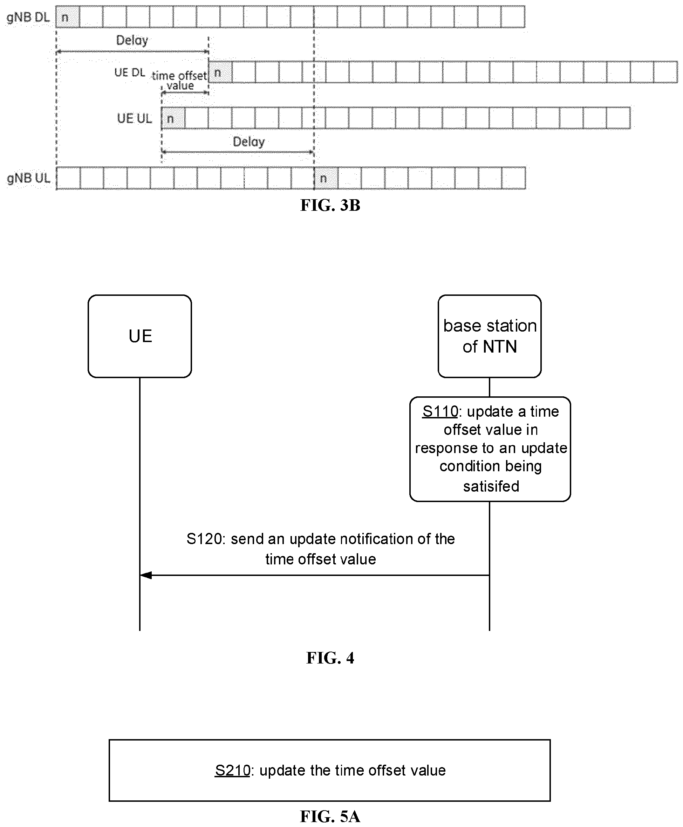

FIGS. 3A and 3B illustrate two schematic diagrams of the time offset value (e.g., the K_offset). In FIGS. 3A and 3B, "UE UL" represents an uplink transmission of the UE; "UE DL" represents a downlink transmission of the LTE; "gNB DL" represents a downlink transmission of the base station of the NTN, and "gNB LTL" represents an uplink transmission of the base station of the NTN.

In embodiments of the disclosure, the time offset value can be updated, instead of not being updated once it is set. The time offset value is updated when the update condition is met, rather than being updated randomly. In this way, the communication failure between the NTN cell and the UE caused by that the time offset never changes can be reduced.

In some cases, the update condition being satisfied may be understood as: needing to adjust the time offset value. It is noteworthy that satisfying the update conditions is not limited to the above examples. For example, the time offset is updated when a current time offset causes that a transmission failure rate between the base station of the NTN and the UE reaches a preset failure rate or when one or more transmissions between the base station of the NTN and the UE within a predetermined time are lost or the number of lost transmissions between the base station of the NTN and the LTE reaches a threshold.

In some embodiments, the time offset can be updated regularly. Therefore, satisfying the update condition is that a time point for regularly update the time offset is reached. In this way, through the regular update, intermittent poor communication quality caused by updating the time offset when the communication quality is decreased can be reduced.

In some examples, the time offset can be updated when an update event occurs. That is, satisfying the update condition includes occurring an update event. The update event includes an orbit of a satellite of the NTN changes, an offset by which the orbit changes reaches a certain threshold, or the satellite is at a specific position of the orbit.

Certainly, the above are only examples to describe how to satisfy the update condition, and there are various ways for specific implementation, which are not limited to the above examples.

In conclusion, in embodiments of the disclosure, the communication failure of the UE in the NTN cell can be reduced by updating the time offset.

In embodiments of the disclosure, the update condition for updating the time offset value includes at least one of:
receiving an update request for requesting to update the time offset value reported by the UE;
the number of UEs that report the update request for requesting to update the time offset value reaching a predetermined number;
a ratio of the number of UEs that report the update request for requesting to update the time offset value to the total number of LTEs in the NTN cell reaching a predetermined ratio value;
a current time reaching a predefined update time;
a current orbit of a satellite of the NTN being an orbit for which the time offset value needs to be updated; or
a current orbital position a satellite of the NTN being a predefined update position.

The above-mentioned predefined update time, the orbit for which the time offset value needs to be updated, and the predefined update position can all be determined by an update mechanism or a communication protocol.

In one embodiment, the time offset may be UE-specific, which means that if any UE reports an update request, it can be considered that the update condition is satisfied, that is, it indicates that the time offset for the NTN needs to be updated.

In another embodiment, the time offset is common to multiple UEs, such that the unnecessary update of the time offset triggered by that a UE reports the update request when the communication quality is poor due to its own reasons can be reduced. In embodiments of the disclosure, it is determined whether to update the time offset value depending on the number of UEs that report the update request. If the number of UEs reporting the update request reaches a predetermined number, it is determined that the update condition is met, that is, it indicates that the time offset for the NTN needs to be updated. The predetermined number may be a preset threshold value.

In some embodiments, the ratio of the LTEs reporting the update request to the total access UEs is used to determine whether the update condition that the NTN needs to update the time offset is satisfied. For example, it is determined that the update condition is satisfied only if the ratio of the number of LTEs that request to update the time offset to the total number of LTEs exceeds a predetermined ratio value. For example, it is determined that the update condition is satisfied only when the ratio reaches such as 0.4, 0.5, 0.6, 0.7 or higher.

Certainly, the above descriptions of the update condition are examples. In a specific implementation process, one or more of the update conditions can be selected based on requirements. Certainly, during the specific implementation, satisfying the update conditions is not limited to the above examples.

For example, the method further includes: determining whether the update condition is satisfied based on the update request for requesting to update the time offset value reported by the UE; and/or determining whether the update condition is satisfied based on a predefined update mechanism of the time offset value.

In performing the communication based on the NTN, if the UE finds a communication failure (for example, one or more transport blocks are lost), the UE may request to update the time offset, and if the UE requests to update the time offset, the UE will report the update request. If the base station of the NTN receives the update request, it can be considered that the update condition is satisfied.

In some embodiments, the update mechanism of the time offset may also be pre-configured, so that it is considered that the update condition is satisfied when a current situation is an occasion when the time offset is updated specified by the update mechanism.

The predefined update mechanism of the time offset may be an update mechanism pre-written into a communication protocol, an update mechanism pre-defined by a network side of the NTN, or an update mechanism negotiated between the base station of the NTN and the UE.

In some embodiments, determining that the update condition is satisfied based on a predefined update mechanism of the time offset value includes at least one of:
determining that the update condition is satisfied in response to a current time being an update time defined by the update mechanism;
determining that the update condition is satisfied, in response to a current orbit of a satellite of the NTN being an orbit for which the time offset value needs to be updated defined by the update mechanism;
determining that the update condition is satisfied, in response to a current orbital position of a satellite of the NTN being an update position defined by the update mechanism.

As an example, if the base station of the NTN determines the update time in advance, then when the current time reaches the update time, it is automatically considered that the update condition is satisfied.

As another example, the base station of the NTN determines a correspondence between time periods and time offsets, and when the current point is a separation time point between two adjacent time periods, it is considered that the update condition is satisfied. An updated time offset may be determined based on the correspondence between an entered time period and the time offset.

The NTN is a non-terrestrial network, and base stations can be carried on a satellite or located on the ground. The satellite may be a geostationary satellite, a high-orbit satellite, a medium-orbit satellite, or a low-orbit satellite. In embodiments of the disclosure, it is determined whether the update condition is satisfied based on current orbital information of the satellite. If the current orbital information matches the update occasion defined by the update mechanism, it is determined that the update condition is satisfied. It is understandable that, once some satellites enter a specific orbit, the time offset is updated. For example, if the satellite switches between its orbits, it can be considered that the update condition is satisfied. If the satellite moves to a specific position on its orbit, it can be considered that the update condition is satisfied.

In some embodiments, the method further includes:
sending a trigger signaling for triggering the LTE to report an update request for requesting to update the time offset value; and/or,
sending a triggering condition for triggering the LTE to report the update request for requesting to update the time offset value.

The trigger signaling can be a broadcast signaling, a multicast signaling or a unicast signaling. If the trigger signaling is a broadcast signaling, all UEs in the NTN cell can theoretically listen to the trigger signaling. If there are more UEs residing in the NTN cell or more UEs determining, based on their own requirements, then there are more UEs requesting to update the time offset. Therefore, in a word, the trigger signaling can trigger one or more UEs in the NTN cell to report the update request for requesting to update the time offset value.

In some embodiments, the trigger condition can be configured for the UE in advance, and the LTE determines by itself whether the current situation satisfies the trigger condition for triggering to send the update request. The configuration information of the trigger condition may be delivered by the base station to the UE through a high layer signaling. For example, the base station may deliver the configuration information of the trigger condition to the LTE through a RRC signaling.

In another embodiment, the trigger condition may be configured in the LTE based on various manners such as a communication standard.

If a trigger condition is configured, the UE may determine whether to send an update request based on the judgment of whether the trigger condition is satisfied. The configuration of the trigger condition can be updated regularly or irregularly.

For example, the trigger condition for triggering the UE to report the update request for requesting to update the time offset value is predefined.

For example, the trigger condition can be negotiated or defined between the base station of the NTN and the UE, pre-defined by a communication protocol, or pre-installed in the base station or the UE by a communication manufacturer.

In some embodiments, the trigger condition includes at least one of the following:
a reference signal measurement value of the NTN cell being lower than a first threshold;
a demodulation performance of the UE on a downlink transmission of the NTN cell being less than a second threshold;
a duration of time when the UE does not receive scheduling information of the NTN cell being greater than or equal to a third threshold;
a duration of time when the UE does not receive a downlink transmission of the NTN cell being greater than or equal to a fourth threshold.

In some embodiments, the first threshold may be a quality threshold, and the quality threshold may be slightly higher than a quality threshold that triggers the UE to perform a cell handover.

The reference signal measurement value includes, but is not limited to, a reference signal received power (RSPR), a reference signal received quality (RSPQ), or a signal-to-noise ratio.

When the LTE residing in the current NTN cell detects that the value of its own reference signal is lower than the first threshold, the LTE will consider that the trigger condition for triggering to report the update condition is satisfied, and thus report the update request. Here, the reference signal value being lower than the first threshold can be understood as the reference signal value being less than the first threshold.

The downlink transmission of the NTN cell includes, but is not limited to, a downlink signaling and/or downlink data. For example, the downlink transmission may include: a DCI transmitted through the PDCCH and/or downlink data transmitted through the PDSCH.

The demodulation performance on the downlink transmission can be determined by various parameters in the demodulation process performed by the UE. For example, the demodulation performance may be represented by: a demodulation success rate, a demodulation failure rate, and/or a demodulation duration required by a successful demodulation of the downlink transmission. The demodulation success rate is positively correlated with the demodulation performance, negatively correlated with the demodulation failure rate, and negatively correlated with the demodulation duration.

For example, the demodulation performance on the downlink transmission of the NTN cell by the LTE being lower than a second threshold including at least one of the following:
a demodulation duration required by the LTE to demodulate the downlink transmission of the NTN cell being greater than or equal to a demodulation duration corresponding to the second threshold;
a demodulation success rate that the LTE demodulates the downlink transmission of the NTN cell being lower than a demodulation success rate corresponding to the second threshold; or
a demodulation failure rate that the LTE demodulates the downlink transmission of the NTN cell being greater than or equal to a demodulation failure rate corresponding to the second threshold.

The NTN cell may transmit various scheduling information, such as scheduling information for all UEs in the cell, scheduling information for a cell group in the cell, or scheduling information for a single UE in the cell.

For example, the NTN cell may schedule transmission resources of the reference signal and/or transmission resources of system information periodically or irregularly, so that even if the LTE itself does not have resource scheduling, the LTE can receive the scheduling information for scheduling resources of the reference signal and/or scheduling of the transmission resources of the system information.

If a UE has not received any scheduling information for a long time, the possible reason is that the current time offset value is no longer adaptive. Therefore, in this case, when the LTE detects that the duration during which no scheduling information is received is greater than or equal to the third threshold, it may be considered that the update condition for updating the time offset value is satisfied, that is, the time offset value needs to be updated at this time.

In some embodiments, when the duration during which the UE does not receive any downlink transmission is greater than or equal to the fourth threshold, it can be considered that the update condition for updating the time offset value is satisfied, that is, the time offset value needs to be updated at this time. The downlink transmission here includes, but is not limited to, downlink data and/or a downlink signaling. The scheduling information is a kind of downlink transmission, but the scheduling information is solely for the scheduling of transmission resources.

In some embodiments, any one of the first threshold to the fourth threshold may be delivered to the UE through the configuration information of the trigger condition. Subsequently, when the UE reports the update request based on the trigger condition, the determination (judgment) on whether the trigger condition is satisfied is performed based on the corresponding threshold value.

In some embodiments, the update request includes at least one of the following:
request information for requesting to update the time offset value;
an update parameter for determining an updated time offset value; or
a suggested value of the time offset value.

If the update request only carries the request information, it is equivalent to the UE only requesting to update the time offset value and the LTE does not give any advice on how to update the time offset value or what the updated time offset value is. At this time, the base station of the NTN can decide by itself.

In some cases, the update request may not carry the request information, but carry the update parameter and/or the suggested value. In this way, the base station of the NTN may directly know that the update of the time offset value is requested after receiving the update request.

The update parameter here includes, but is not limited to, an index or an update function of the updated time offset value. In a word, the update parameter can be used by the base station of the NTN to determine a time offset value suggested by the UE or a value by which the time offset value changes suggested by the UE.

In some embodiments, as illustrated in FIG. 4, the method further includes the following.

At block S 120, an update notification of the time offset value is sent.

If the base station determines to update the time offset, the base station will send the update notification. The update notification can be used for the UE to determine the updated time offset value.

In some embodiments, the update notification may directly carry the updated time offset value.

In other embodiments, the update notification may carry an update parameter indicating the updated time offset value, such as an index or an update function. In still other embodiments, the update notification may carry a value by which the time offset value changes.

In some embodiments, sending the update notification of the time offset value includes at least one of the following:
sending a physical layer signaling carrying the updated time offset value;
sending a higher-layer signaling carrying the updated time offset value; or
sending a physical layer signal having a correspondence with the updated time offset value.

For example, in embodiments of the disclosure, the updated time offset value may be carried explicitly or implicitly. The explicitly carrying means using one or more bits to indicate the updated time offset value.

The implicitly carrying means realizing the sending of the updated time offset value through various correspondences.

The physical layer signaling includes, but is not limited to, a DCI.

In other embodiments, the physical layer signaling may be a reference signal of the physical layer.

If there is a correspondence between a certain reference signal of the physical layer and a time offset value, then sending the updated time offset value can be realized by transmitting the corresponding reference signal.

The higher-layer signaling may include: a signaling of any layer above the physical layer, such as a medium access control (MAC) signaling and/or a RRC signaling.

In some embodiments, sending the physical layer signaling carrying the updated time offset value includes:
sending group common downlink control information carrying the updated time offset value;
   or,
sending a UE-specific downlink control information carrying the updated time offset value.

In one embodiment, the group common downlink control information is per a UE group, and the delivered updated time offset value is applicable to the LTE group.

In another embodiment, the UE-specific downlink control information is per a UE.

In some embodiments, a scrambling sequence of the group common downlink control information carrying the updated time offset value is different from a scrambling sequence of group common downlink control information that does not carry any updated time offset value;
and/or,
a scrambling sequence of a check code in the group common downlink control information carrying the updated time offset value is different from a scrambling sequence of a check code in the group common downlink control information that does not carry any updated time offset value.

The aforementioned scrambling sequences may each be a radio network temporary identity (RNTI), and the update notification is carried by the group common downlink control information, such that the scrambling sequence may be a group RNTI known by all UEs in the UE group. That is, the scrambling sequence of the group common downlink control information carrying the updated time offset value is the radio network temporary identity of the group common downlink control information.

The scrambling sequence of the group downlink common information that carries the updated time offset value and the scrambling sequence of the group downlink control information that does not carry any updated time offset value are different, so the UE can know whether currently received group common downlink control information carries the updated time offset value during the descrambling process.

For example, the scrambling sequence for scrambling the group common downlink control information is the radio network temporary identity of received group common downlink control information.

In some embodiments, the update notification includes at least one of the following:
an update instruction, for indicating an update of the time offset value;
an update parameter, for determining the updated time offset value; or
an update value, for indicating the updated time offset value.

At least one of the above contents carried in the update notification can be used by the UE to determine the updated time offset value.

As illustrated in FIG. 5A, embodiments of the disclosure provide a method for updating a time offset value for an NTN. The method is performed by a user equipment UE, and the method includes the following.

At block S210, the time offset value is updated.

The method is applied to the UE, which means that the method is performed by the UE. The UE can access the NTN cell and update the time offset value in response to the update condition being satisfied. Through the update of the time offset value, the UE can use the correct time offset value to communicate with the base station of the NTN cell, thereby reducing the influence of the time offset value corresponding to a long transmission distance between the UE residing in the NTN cell and the base station on the communication quality. Therefore, the communication quality of the UE accessing the NTN cell is improved.

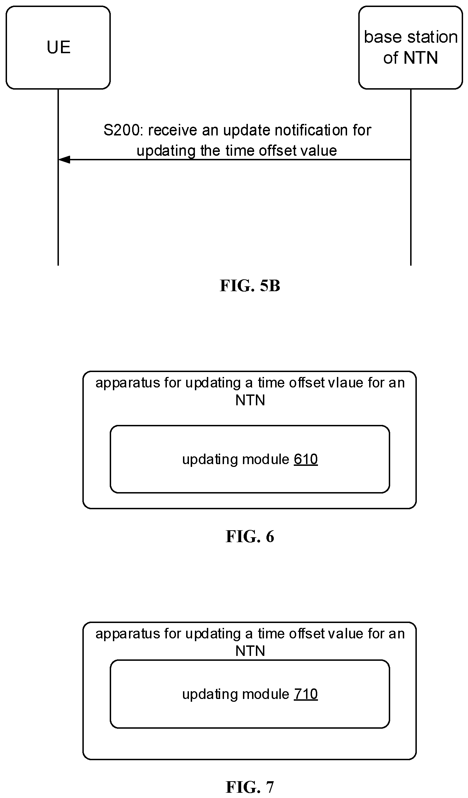

In some embodiments, as illustrated in FIG. 5B, embodiments of the disclosure provide a method for updating a time offset value for an NTN. The method includes the following.

At block S200, an update notification for updating the time offset value is received.

The step of receiving the update notification may be used alone, or may be used in combination with other aforementioned steps for updating the time offset value.

The update notification may be a physical layer signaling, a physical layer signal and/or a higher-layer signaling.

The content of the update notification includes at least one of the above-mentioned update instruction, update parameter and/or update value.

Therefore, in some embodiments, S210 may include updating the time offset value based on the update notification.

For example, the block S210 may include: updating the time offset value in response to receiving the update notification. In detail, updating the time offset value by the LTE based on the update notification may include updating the time offset value based on the content carried in the update notification or updating the time offset value based on a pre-obtained update mechanism.

In one embodiment, the method further includes: sending an update request for requesting to update the time offset value.

The update request can be used to trigger the network side to determine whether the time offset value needs to be updated. If the time offset value needs to be updated, the network side may issue the update notification of the time offset value.

In some embodiments, sending an update request for requesting to update the time offset value includes at least one of:
sending an update request for requesting to update the time offset value in response to a trigger condition for reporting the update request for requesting to update the time offset value being satisfied;
sending the update request for requesting to update the time offset value in response to receiving the trigger signaling for triggering the update request for requesting to update the time offset value;
sending the update request for requesting to update the time offset value in response to a demodulation performance on the downlink transmission of the NTN cell being lower than a second threshold;
sending the update request for requesting to update the time offset value in response to a duration during which scheduling information of the NTN cell is not received being greater than or equal to a third threshold; or
sending the update request for requesting to update the time offset value in response to a duration during which the downlink transmission of the NTN cell is not received is greater than or equal to a fourth threshold.

In some embodiments, the reporting of the update request may be: if the UE itself judges that the use status of the current time offset value or the communication status between the UE and the base station of the NTN satisfies the trigger condition for triggering the update request for requesting to update the time offset value, then the UE automatically reports the update request. At this time, the LTE does not need the base station to issue a trigger signaling for triggering to report the update request.

In one embodiment, the update request includes at least one of:
request information for requesting to update the time offset value;
an update parameter for determining the updated time offset value; or
a suggested value of the time offset value.

In embodiments of the disclosure, the LTE may simply report the request information, for requesting the network to update the time offset value.

In other embodiments, if the UE can estimate, based on a usage condition of the current time offset value, a time offset value that can improve the communication quality between the base station of the NTN and the UE, the estimated time offset value can be used as the suggested value or an update parameter corresponding to the estimated time offset value can be carried in the update request for reporting.

After receiving the update parameter and/or the suggested value, the network side can determine the updated time offset value with reference to the suggested value or the update parameter, or the network side can ignore the suggested value of the time offset value reported by the UE or directly ignore the update parameter.

In some embodiments, the update notification includes at least one of:
an update instruction, for indicating to update the time offset value;
an update parameter for determining the updated time offset value; or
an update value for indicating the updated time offset value.

In some embodiments, updating the time offset value includes at least one of:
determining the updated time offset value based on the predefined update mechanism in response to receiving the update instruction carrying the update notification;
updating the time offset value in response to a current time is a predefined update time;
updating the time offset value in response to an orbit of a satellite of the NTN being an orbit for which the time offset value needs to be updated; or
updating the time offset value in response to a current orbital position of the satellite of the NTN being a predefined update position.

In some embodiments, if the update notification sent by the network side carries the update instruction but no update value or update parameter, the UE may determine the updated time offset value by itself based on the predefined update mechanism. The update mechanism is consistent with an update mechanism stored on the network side. In this way, the updated time offset value on the UE side is consistent with the updated time offset value determined by the network side.

In some embodiments, the update mechanism of how to update the time offset value is pre-stored in the UE. In this way, the UE can update the time offset value by itself based on the predefined update mechanism of the time offset value without interacting with the network. For example, updating the time offset value includes: updating the time offset value based on the update mechanism, in response to the predefined update mechanism of the time offset value being satisfied. For example, updating the time offset value based on the update mechanism in response to the predefined update mechanism of the time offset value being satisfied includes at least one of:
updating the time offset value based on the update mechanism, in response to a current time being an update time defined by the predefined update mechanism of the time offset value;
updating the time offset value based on the update mechanism, in response to an orbit of a satellite of the NTN being an orbit for which the time offset value needs to be updated defined by the predefined update mechanism;
updating the time offset value based on the update mechanism, in response to a current orbital position of a satellite of the NTN being an update position defined by the update mechanism. For example, a correspondence between different time periods (or different time points) and different time offset values is predefined. In view of this, if the UE detects that the current time has reached the update time, the time offset value is updated based on the current time, and the updated time offset value is determined based on the aforementioned correspondence.

The correspondence between different time points and different time offset values can be shown in Table 1:

**Table 1**

| time point related to the update | time offset value |
|---|---|
| time point 1 | time offset value 1 |
| time point 2 | time offset value 2 |
| ...... | ...... |
| time point N | time offset value N |

In some embodiments, after the satellite moves for one cycle, N cycles, or half a cycle, the time offset value will be updated at a certain position, and the correspondence is shown in Table 2. If the UE obtains the position information of a satellite forming the NTN cell, it can be determined that the time offset value needs to be updated based on Table 2 in response to determining that trigger condition is satisfied, and then the time offset value is updated based on the time offset values shown in Table 2.

**Table 2**

| update position | corresponding time offset value |
|---|---|
| position 1 | time offset value A |
| position 2 | time offset value B |
| ...... | ...... |
| position N | time offset value N |

For an orbit-changing satellite carrying a base station, in response to determining that an orbit of a satellite changes, the UE determines that the update mechanism is satisfied, and the time offset value is updated based on the correspondence shown in Table 3.

**Table 3**

| update orbit | corresponding time offset value |
|---|---|
| orbit 1 | time offset value 1 |
| orbit 2 | time offset value 2 |
| ...... | ...... |
| orbit N | time offset value N |

In some embodiments, determining the updated time offset value based on the predefined update mechanism includes at least one of:
determining the updated time offset value based on adjustment information defined by the update mechanism;
determining the updated time offset value based on a correspondence between status information and time offset values defined by the update mechanism. The status information includes the current time information and/or orbital information of the satellite of the NTN.

In some embodiments, it is possible that the correspondence between the update timing point and the time offset value is not directly defined, but a respective adjusted value of each time offset value may be defined. In this case, the updated time offset value can be determined based on the adjustment information defined by the update mechanism. At this time, the updated time offset value can be determined based on adjustment information.

In a word, in embodiments of the present disclosure, there are many ways to determine the updated time offset value, which is not limited to any one of the above examples.

As illustrated in FIG. 6, embodiments of the disclosure provide an apparatus for updating a time offset value for an NTN. The apparatus includes an updating module 610.

The updating module 610 is configured to update a time offset value in response to an update condition being satisfied.

In some embodiments, the updating module 610 may be a program module. After the program module is executed by a processor, the time offset value can be updated when the update condition is satisfied.

In other embodiments, the updating module 610 may be a combination of software and hardware. The combination of software and hardware includes, but is not limited to, a programmable array. The programmable array includes, but is not limited to, a complex programmable array or a field programmable array.

In still other embodiments, the updating module 610 may be a pure hardware module. The pure hardware module includes, but is not limited to, an application specific integrated circuit.

In some embodiments, the update condition for updating the time offset value includes at least one of:
receiving an update request for requesting to update the time offset value reported by the UE;
the number of UEs reporting the update request for requesting to update the time offset value reaching a predetermined number;
a ratio of the number of UEs reporting the update request for requesting to update the time offset value to the total number of UEs in the NTN cell reaching a predetermined ratio value;
the current time reaching a predefined update time;
a current orbit of the satellite of the NTN being an orbit for which the time offset value needs to be updated; or
a current orbital position of the satellite of the NTN being predefined update position.

In some embodiments, the apparatus further includes a sending module.

The sending module is configured to send a trigger signaling for triggering the update request for requesting to update the time offset value; and/or, to send a trigger condition for triggering the update request for requesting to update the time offset value.

In some embodiments, the trigger condition for triggering to update the time offset value is predefined.

In some embodiments, the trigger condition includes at least one of:
a reference signal measurement value of the NTN cell being lower than a first threshold;
a demodulation performance of the UE on a downlink transmission of the NTN cell being lower than a second threshold;
a duration of time when the UE does not receive scheduling information of the NTN cell being greater than or equal to a third threshold; or
a duration of time when UE does not receive a downlink transmission of the NTN cell being greater than or equal to a fourth threshold.

In some embodiments, the update request includes at least one of:
request information for requesting to update the time offset value;
an update parameter for determining the updated time offset value; or
a suggested value of the time offset value.

In some embodiments, the apparatus further includes a sending module.

The sending module is configured to send an update notification of the time offset value.

In some embodiments, the sending module is configured to perform at least one of:
sending a physical layer signaling carrying the updated time offset value;
sending a higher-layer signaling carrying the updated time offset value; or
sending a physical layer signal having a correspondence with the updated time offset value.

In some embodiments, the sending module is configured to send group common downlink control information carrying an updated time offset value; or send LTE-specific downlink control information carrying an updated time offset value.

In some embodiments, a scrambling sequence of the group common downlink control information carrying the updated time offset value is different from a scrambling sequence of group common downlink control information that does not carry any updated time offset value; and/or,
a scrambling sequence of a check code in the group common downlink control information carrying the updated time offset value is different from a scrambling sequence of a check code in group common downlink control information that does not carry any updated time offset value.

In some embodiments, the scrambling sequence of the group common downlink control information carrying the updated time offset value is a radio network temporary identity of received group common downlink control information.

In some embodiments, the update notification includes at least one of:
an update instruction, for indicating to update the time offset value;
an update parameter for determining the updated time offset value; or
an update value for indicating the updated time offset value.

As illustrated in FIG. 7, embodiments of the disclosure provide an apparatus for updating a time offset value for an NTN. The apparatus includes an updating module 710.

The updating module 710 is configured to update the time offset value.

In some embodiments, the updating module 710 may be a program module. After the program module is executed by a processor, the time offset value of the NTN is updated.

In other embodiments, the updating module 710 may be a combination of software and hardware. The combination of software and hardware includes, but is not limited to, a programmable array. The programmable array includes, but is not limited to, a field programmable array and/or a complex programmable array.

In still other embodiments, the update module 710 may be a pure hardware module. The pure hardware module includes, but is not limited to, an application specific integrated circuit.

In some embodiments, the apparatus further includes a receiving module.

The receiving module is configured to receive an update notification for updating the time offset value.

The updating module 710 is configured to update the time offset value based on the update notification.

In some embodiments, the apparatus further includes a receiving module.

The receiving module is configured to receive an update notification for updating the time offset value.

In some embodiments, the apparatus further includes a sending module.

The sending module is configured to send an update request for requesting to update the time offset value.

In some embodiments, the sending module is configured to perform at least one of:
sending the update request for requesting to update the time offset value in response to receiving a trigger signaling for triggering the update request for requesting to update the time offset value;
sending the update request for requesting to update the time offset value in response to a reference signal measurement value of the NTN cell being lower than a first threshold;
sending the update request for requesting to update the time offset value in response to a demodulation performance on a downlink transmission of an NTN cell being lower than a second threshold;
sending the update request for requesting to update the time offset value in response to a duration of time when scheduling information of an NTN cell being greater than or equal to a third threshold; or
sending the update request for requesting to update the time offset value in response to a duration of time when a downlink transmission of an NTN cell being greater than or equal to a fourth threshold.

In some embodiments, the update request includes at least one of:
request information for requesting to update the time offset value;
an update parameter for determining the updated time offset value, or
a suggested value of the time offset value.

In some embodiments, the update notification includes at least one of:
an update instruction, for indicating to update the time offset value;
an update parameter for determining the updated time offset value; or
an update value for indicating the updated time offset value.

In some embodiments, the updating module is configured to determine an updated time offset value in response to the update notification carrying the update instruction.

In some embodiments, the updating module is configured to perform at least one of:
updating the time offset value in response to a current time being a predefined update time;
updating the time offset value in response to an orbit of a satellite of the NTN being an orbit for which the time offset value needs to be updated; or
updating the time offset value in response to a current orbital position of a satellite of the NTN being a predefined update position.

In some embodiments, the updating module is configured to perform at least one of:
determining the updated time offset value based on predefined adjustment information, or
determining the updated time offset value based on a predefined correspondence between status information and time offset values. The status information includes: current time information and/or orbital information of the satellite of the NTN.

In embodiments of the disclosure, the method for adjusting parameters applied to a satellite communication system (which is a kind of NTN communication system) is provided. Therefore, in a satellite communication scenario, a problem of adjusting the timing relationship between the base station and the UE as the satellite moves in a high speed can be solved effectively, thereby ensuring the reliability of data interaction.

Embodiments of the disclosure provide a following method.

The base station determines whether to update K_offset, which may be as follows.

The base station determines whether to update the K_offset based on the information reported by the UE or a predefined update mechanism.

The base station determines the update of K_offset based on the information reported by the LTE as follows.

In this way, the LTE reports the update request for determining the K_offset based on the trigger condition or a trigger signaling sent by the base station, and the base station determines to update the K_offset when finding that the UE reaches a preset rule of the reported update request. The preset rule here may be one of the aforementioned update mechanisms.

In an implementation, the LTE reports the update request based on a trigger condition. The trigger condition is pre-defined or pre-configured by the base station for the UE.

For example, the trigger condition may be that a measurement result of the UE is lower than a predefined threshold, or a demodulation performance of the UE is lower than a certain threshold, or the UE does not receive any scheduling instruction within a predefined time. When the UE determines that the trigger condition for reporting the update request is satisfied, the UE will report the update request of K_offset. The update request may indicate whether the UE needs the update of K_offset. Certainly, in some embodiments, the update request may also include a value by which the information changes.

In another implementation, the UE determines the update request for K_offset based on a trigger instruction sent by the base station. When the UE receives the signaling or signal sent by the base station, the UE determines to report the update request.

Similarly, the UE will report the update request for K_offset. The update request may indicate whether the UE needs the update of the K_offset. Certainly, in other embodiments, the update request may also include a value by which the information needs to be adjusted. The signaling sent by the base station may be a physical layer signaling, such as DCI used for common information transmission or LTE-specific transmission, in which the trigger information is explicitly or implicitly included.

When the base station determines that the preset rule for updating K_offset is satisfied based on the information reported by the UE, the base station determines to update the K_offset. For example, the preset rule may be the number of UEs reporting the need of the update of K_offset or a percentage of these LTEs is greater than a predetermined threshold.

The base station determines to update K_offset based on a predefined mechanism as follows.

The predefined mechanism may be time information, orbital information or the like.

For example, in an implementation, the base station determines to update K_offset based on the time information. The time information may be an absolute time, such as 1:00 am, 2:00 am ..., or a logical time, such as a time interval relative to a certain reference time.

The base station determines a correspondence between K_offset and time information as shown in Table 4 below in advance. The correspondence needs to be predefined or sent to the LTE by the base station through a high-level signaling or physical layer information.

**Table 4**

| information about time point | Information about K_offset |
|---|---|
| time point 1 | K_offset value 1 |
| time point 2 | K_offset value 2 |
| ...... | ...... |
| time point N | K_offset value N |

The base station determines whether to update K_offset based on the current time information. Likewise, the LTE determines a message about the currently used K_offset based on the time information.

The method of sending the update notification of K_offset can be as follows.

The base station can notify the LTE of the adjustment of K_offset by the following method.

Through an explicit indication method, the base station can notify the UE of the update of K_offset by carrying explicit information in a higher-layer signaling or a physical layer signaling.

In an implementation method, a group of UEs may be notified to update K_offset through a group common DCI. The group common DCI can be scrambled with a new RNTI or identified through scrambling the CR by a scrambling sequence.

In another implementation, the explicit information may be a pre-defined signal. For example, the correspondence between signals and K_offset adjustment values may be pre-defined or pre-configured. The UE determines whether to adjust the K_offset based on the received signal and determines the adjustment value if determining to adjust the K_offset.

Through an implicit indication method. In this implementation, the UE determines the adjustment information of K_offset based on a predefined mechanism, such as the time information or the orbital information described above.

After determining the location information of the satellite, the UE determines the current value of K_offset based on the pre-sent or pre-defined correspondence between the time information or the orbital information and the K_offset pre-sent or pre-defined by the base station.

In embodiments of the disclosure, the method for adjusting parameters applied to a satellite communication systemis provided. Therefore, in a satellite communication scenario, a problem of adjusting the timing relationship between the base station and the UE as the satellite moves in a high speed can be solved effectively, thereby ensuring the reliability of data interaction.

Embodiments of the disclosure provide a communication device. The communication device includes a memory and a processor.

The memory is configured to store instructions executable by the processor.

The processor is connected to the memory.

The processor is configured to execute the method for updating the time offset value for the NTN according to any of the foregoing technical solutions.

The processor may include various types of storage media. The storage medium can be a non-transitory computer storage medium that can continue to memorize information stored thereon after the communication device is powered down.

Here, the communication device includes: a base station of the NTN or a LTE.

The processor may be connected to the memory through a bus or the like, for reading an executable program stored on the memory, such as at least one of the methods illustrated in FIG. 2, FIG. 4, FIG. 5A and/or FIG. 5B.

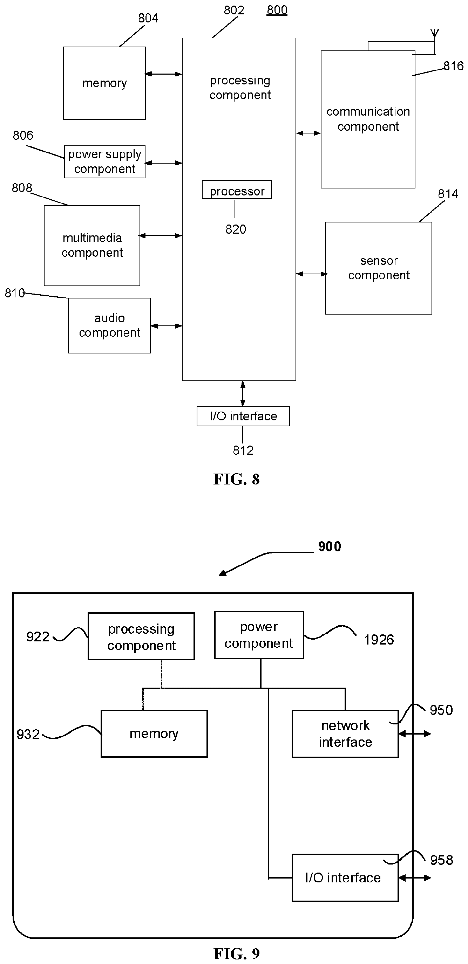

FIG. 8 is a block diagram illustrating a UE 800 according to an example embodiment. For example, the UE 800 may be a mobile phone, a computer, a digital broadcast UE, a messaging device, a game console, a tablet device, a medical device, a fitness device, a personal digital assistant, or the like.

As illustrated in FIG. 8, the UE 800 may include one or more of: a processing component 802, a memory 804, a power supply component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communications, camera operations, and recording operations. The processing component 802 may include one or more processors 820 to perform all or part of the steps in the above described method. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the LTE 800, contact data, phonebook data, messages, pictures, video, etc. The memory 804 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of wakeup time and a pressure associated with the touch or swipe action. In some embodiments, the multimedia component 808 includes a front-facing camera and/or a rear-facing camera. When the UE 800 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 810 is configured to output and/or input audio signals. For example, the audio component 810 includes a microphone configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the LTE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a Complementary Metal Oxide Semiconductor (CMOS) or Charge-Coupled Device (CCD) image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The LTE 800 can access a wireless network based on a communication standard, such as Wi-Fi, 2G or 3G, or a combination thereof. In an embodiment, the communication component 816 receives a broadcast signal or broadcast associated information from an external broadcast management system via a broadcast channel. In an embodiment, the communication component 816 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In embodiments, the LTE 800 may be implemented with at least one Application Specific Integrated Circuit (ASIC), Digital Signal Processor (DSP), Digital Signal Processing Device (DSPD), Programmable Logic Device (PLD), Field Programmable Gate Array (FPGA), controller, micro-controller, microprocessor or other electronic components, for performing the above described method.

In embodiments, there is also provided a non-transitory computer readable storage medium including executable instructions, such as the memory 804, executable by the processor 820 in the UE 800, for performing the above methods. For example, the non-transitory computer-readable storage medium may be a ROM, a Random Access Memory (RAM), a CD-ROM, a magnetic tape, a floppy disc, and an optical data storage device.

FIG. 9 is a block diagram illustrating an access device according to an embodiment of the disclosure. For example, the communication device 900 may be provided as a network side device. The communication device can be a base station of the NTN and/or the UE.

As illustrated in FIG. 9, the communication device 900 includes a processing component 922 consisting of one or more processors, and memory resources represented by a memory 932 for storing instructions that may be executed by the processing component 922, such as applications. The application programs stored in the memory 932 may include one or more modules each corresponding to a set of instructions. In addition, the processing component 922 is configured to execute the instructions to perform any of methods for updating the time offset value for the NTN described above, for example, the methods illustrated in FIGS. 2, 4, 5A and/or 5B.

The communication device 900 may also include a power component 926 configured to perform power management of the communication device 900, a wired or wireless network interface 950 configured to connect the communication device 900 to a network, and an input-output (I/O) interface 958. The communication device 900 may operate based on an operating system stored in the memory 932, such as Windows Server TM, Mac OS XTM, UnixTM, LinuxTM, FreeBSDTM, or the like.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples be considered as illustrative only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A method for updating a time offset value for a non-terrestrial network (NTN), performed by a base station, comprising:
updating a time offset value in response to an update condition being satisfied.

2. The method of claim 1, wherein the update condition for updating the time offset value comprises at least one of:
receiving an update request for requesting to update the time offset value reported by a user equipment (UE);
a number of UEs that report an update request for requesting to update the time offset value reaching a predetermined number;
a ratio of a number of UEs that report an update request for requesting to update the time offset value to a total number of UEs within an NTN cell reaching a predetermined ratio value;
a current time reaching a predefined update time;
a current orbit of a satellite of the NTN being an orbit for which the time offset value needs to be updated; or
a current orbital position of a satellite of the NTN being a predefined update position.

3. The method of claim 1 or 2, further comprising:
sending a trigger signaling for triggering an update request for requesting to update the time offset value; and/or
sending a trigger condition for triggering an update request for requesting to update the time offset value.

4. The method of claim 1, wherein a trigger condition for updating the time offset value is predefined.

5. The method of claim 4 or 5, wherein the trigger condition comprises at least one of:
a reference signal measurement value of an NTN cell being less than a first threshold;
a demodulation performance of the UE on a downlink transmission of an NTN cell being less than a second threshold;
a duration during which the UE does not receive scheduling information of an NTN cell being greater than or equal to a third threshold; or
a duration during which the UE does not receive a downlink transmission of an NTN cell being greater than or equal to a fourth threshold.

6. The method of any one of claims 2 to 5, wherein the update request comprises at least one of:
request information, for requesting to update the time offset value;
an update parameter, for determining an updated time offset value; or
a suggested value of the time offset value.

7. The method of any one of claims 1 to 6, further comprising:
sending an update notification of the time offset value.

8. The method of claim 7, wherein sending the update notification of the time offset value comprises at least one of:
sending a physical layer signaling carrying an updated time offset value;
sending a higher-layer signaling carrying an updated time offset value; or
sending a physical layer signal having a correspondence with an updated time offset value.

9. The method of claim 8, wherein sending the physical layer signaling carrying the updated time offset value comprises:
sending group common downlink control information carrying the updated time offset value; or
sending a UE-specific downlink control information carrying the updated time offset value.

10. The method of claim 9, wherein a scrambling sequence of the group common downlink control information carrying the updated time offset value is different from a scrambling sequence of group common downlink control information not carrying the updated time offset value; and/or
a scrambling sequence of a check code in the group common downlink control information carrying the updated time offset value is different from a scrambling sequence of a check code in group common downlink control information not carrying the updated time offset value.

11. The method of claim 10, wherein the scrambling sequence of the group common downlink control information carrying the updated time offset value is a radio network temporary identity of received group common downlink control information.

12. The method of any one of claims 7 to 11, wherein the update notification comprises at least one of:
an update instruction, for indicating to update the time offset value;
an update parameter, for determining an updated time offset time; or
an update value, for indicating an updated time offset time.

13. A method for updating a time offset value of a non-terrestrial network (NTN), performed by a user equipment (UE), comprising:
updating a time offset value.

14. The method of claim 13, further comprising:
receiving an update notification for updating the time offset value.

15. The method of claim 14, further comprising:
sending an update request for requesting to update the time offset value.

16. The method of claim 14, wherein sending the update request for requesting to update the time offset value comprises at least one of:
sending the update request for requesting to update the time offset value in response to receiving a trigger signaling for triggering the update request for requesting to update the time offset value;
sending the update request for requesting to update the time offset value in response to a signal reference measurement value of an NTN cell being less than a first threshold;
sending the update request for requesting to update the time offset value in response to a demodulation performance on a downlink transmission of an NTN cell being less than a second threshold;
sending the update request for requesting to update the time offset value in response to a duration during which the UE does not receive scheduling information of the an cell being greater than or equal to a third threshold; or
sending the update request for requesting to update the time offset value in response to a duration during which the UE does not receive a downlink transmission of an NTN cell being greater than or equal to a fourth threshold.

17. The method of claim 15 or 16, wherein the update request comprises at least one of:
request information, for requesting to update the time offset value;
an update parameter, for determining an updated time offset value; or
a suggested value of the time offset value.

18. The method of any one of claims 14 to 17, wherein the update notification comprises at least one of:
an update instruction, for indicating to update the time offset value;
an update parameter, for determining an updated time offset time; or
an update value, for indicating an updated time offset time.

19. The method of any one of claims 14 to 18, wherein receiving the update notification for updating the time offset value comprises:
determining an updated time offset value in response to the update notification carrying an update instruction.

20. The method of claim 13, wherein updating the time offset value comprises at least one of:
updating the time offset value in response to a current time reaching a predefined update time;
updating the time offset value in response to an orbit of a satellite of the NTN being an orbit for which the time offset value needs to be updated; or
updating the time offset value in response to an orbital position of a satellite of the NTN being a predefined update position.

21. The method of claim 19 or 20, wherein updating the time offset value comprises at least one of:
determining an updated time offset value based on predefined adjustment information; or
determining an updated time offset value based on a predefined correspondence between status information and time offset values, wherein the status information comprises current time information and/or orbital information of a satellite of the NTN.

22. An apparatus for updating a time offset value for a non-terrestrial network (NTN), comprising:
an updating module, configured to update a time offset value in response to an update condition being satisfied.

23. The apparatus of claim 22, wherein the update condition for updating the time offset value comprises at least one of:
receiving an update request for requesting to update the time offset value reported by a user equipment (UE);
a number of UEs that report the update request for requesting to update the time offset value reaching a predetermined number;
a ratio of a number of UEs that report the update request for requesting to update the time offset value to a total number of UEs within an NTN cell reaching a predetermined ratio value;
a current time reaching a predefined update time;
a current orbit of a satellite of the NTN being an orbit for which the time offset value needs to be updated; or
a current orbital position of a satellite of the NTN being a predefined update position.

24. The apparatus of claim 22 or 23, further comprising:
a sending module, configured to send a trigger signaling for triggering an update request for requesting to update the time offset value; and/or send a trigger condition for triggering an update request for requesting to update the time offset value.

25. The apparatus of claim 22, wherein the trigger condition for updating the time offset value is predefined.

26. The apparatus of claim 24 or 25, wherein the trigger condition comprises at least one of:
a reference signal measurement value of an NTN cell being less than a first threshold;
a demodulation performance of the UE on a downlink transmission of the NTN cell being less than a second threshold;
a duration when the UE does not receive scheduling information of the NTN cell being greater than or equal to a third threshold; or
a duration when the UE does not receive a downlink transmission of the NTN cell being greater than or equal to a fourth threshold.

27. The apparatus of any one of claims 23 to 26, wherein the update request comprises at least one of:
request information, for requesting to update the time offset value;
an update parameter, for determining an updated time offset value; or
a suggested value of the time offset value.

28. The apparatus of any one of claims 22 to 27, further comprising:
a sending module, configured to send an update notification of the time offset value.

29. The apparatus of claim 28, wherein the sending module is further configured to perform at least one of:
sending a physical layer signaling carrying an updated time offset value;
sending a higher-layer signaling carrying the updated time offset value; or
sending a physical layer signal having a correspondence with the updated time offset value.

30. The apparatus of claim 29, wherein the sending module is configured to send group common downlink control information carrying the updated time offset value; or send a UE-specific downlink control information carrying the updated time offset value.

31. The apparatus of claim 30, wherein a scrambling sequence of the group common downlink control information carrying the updated time offset value is different from a scrambling sequence of group common downlink control information not carrying the updated time offset value; and/or
a scrambling sequence of a check code in the group common downlink control information carrying the updated time offset value is different from a scrambling sequence of a check code in group common downlink control information not carrying the updated time offset value.

32. The apparatus of claim 31, wherein the scrambling sequence of the group common downlink control information carrying the updated time offset value is a radio network temporary identity of received group common downlink control information.

33. The apparatus of any one of claims 28 to 32, wherein the update notification comprises at least one of:
an update instruction, for indicate to update the time offset value;
an update parameter, for determining an updated time offset time; or
an update value, for indicating the updated time offset time.

34. An apparatus for updating a time offset value of a non-terrestrial network (NTN), comprising:
an updating module, configured to update a time offset value.

35. The apparatus of claim 34, further comprising:
a receiving module, configured to receive an update notification for updating the time offset value.

36. The apparats of claim 35, further comprising:
a sending module, configured to send an update request for requesting to update the time offset value.

37. The apparatus of claim 35, wherein the sending module is further configured to perform at least one of:
send the update request for requesting to update the time offset value in response to receiving a trigger signaling for triggering the update request for requesting to update the time offset value;
sending the update request for requesting to update the time offset value in response to a signal reference measurement value of an NTN cell being less than a first threshold;
sending the update request for requesting to update the time offset value in response to a demodulation performance on a downlink transmission of the NTN cell being less than a second threshold;
sending the update request for requesting to update the time offset value in response to a duration when the UE does not receive scheduling information of the NTN cell being greater than or equal to a third threshold; or
sending the update request for requesting to update the time offset value in response to a duration when the UE does not receive a downlink transmission of the NTN cell being greater than or equal to a fourth threshold.

38. The apparatus of claim 36 or 37, wherein the update request comprises at least one of:
request information, for requesting to update the time offset value;
an update parameter, for determining an updated time offset value; or
a suggested value of the time offset value.

39. The apparatus of any one of claims 35 to 38, wherein the update notification comprises at least one of:
an update instruction, for indicating to update the time offset value;
an update parameter, for determining an updated time offset time; or
an update value, for indicating the updated time offset time.

40. The apparatus of any one of claims 35 to 39, wherein the updating module is configured to determine an updated time offset value in response to the update notification carrying the update instruction.

41. The apparatus of claim 34, wherein the updating module is configured to perform at least one of:
updating the time offset value in response to a current time reaching a predefined update time;
updating the time offset value in response to an orbit of a satellite of the NTN being an orbit for which the time offset value needs to be updated; or
updating the time offset value in response to an orbital position of a satellite of the NTN being a predefined update position..

42. The apparatus of claim 40 or 41, wherein the updating module is configured to perform at least one of:
determining an updated time offset value based on predefined adjustment information; or
determining an updated time offset value based on a predefined correspondence between status information and time offset values, wherein the status information comprises current time information and/or orbital information of a satellite of the NTN.

43. A communication device, comprising: a processor; a transceiver; a memory; and an executable program stored on the memory and executable by the processor, wherein when the executable program is executed by the processor, the method of any one of claims 1 to 12 or claims 13 to 21 is performed.

44. A computer storage medium, having an executable program stored thereon; wherein after the executable program is executed by a processor, the method of any one of claims 1 to 12 or claims 13 to 31 is performed.
